# EUROPEAN PATENT SPECIFICATION

(11) **EP 3 132 686 B1**
(45) Date of publication and mention of the grant of the patent: **19.07.2023**
(21) Application number: 14889199.7
(22) Date of filing: 15.04.2014
(51) Int. Cl.: A23K 10/30, A23L 33/19, A23K 40/25, A23L 7/10, A23L 33/185, A23K 10/28, A23K 50/60, A23P 30/20

(54) **METHOD FOR OBTAINING A WHEY PERMEATE SUPPLEMENTARY FEED AND PRODUCT OBTAINED BY SAID METHOD**
VERFAHREN ZUR GEWINNUNG EINES MOLKENPERMEATERGÄNZUNGSFUTTERS UND DURCH BESAGTES VERFAHREN ERHALTENES PRODUKT
PROCÉDÉ D'OBTENTION D'UN ALIMENT COMPLÉMENTAIRE POUR ANIMAUX À BASE DE PERMÉAT DE LACTOSÉRUM ET PRODUIT OBTENU PAR CE PROCÉDÉ

(43) Date of publication of application: 22.02.2017
(73) Proprietor: Internacional De Comercio Y Servicios, S.L., 36900 Marin, Pontevedra (ES)
(72) Inventor: NOGUEIRA GARCIA, Ceferino, 36900 Marin Pontevedra (ES)
(74) Representative: Urizar Anasagasti, Jesus Maria
(86) International application number: PCT/ES2014/070315
(87) International publication number: WO 2015/158933

(56) References cited:
- EP-A1- 1 219 177
- WO-A1-2009/006475
- US-A- 3 467 525
- US-A1- 2008 193 587
- US-A1- 2009 258 124
- Annon: "DairylacR 80", , 7 August 2017 (2017-08-07), XP055396543, Retrieved from the Internet: URL:http://www.wltdistributors.com/wp-cont ent/uploads/2011/12/DairyLac-80.pdf [retrieved on 2017-08-07]

## Description

### Technical field

The invention relates to a process for obtaining a product intended for feeding animals, more specifically for animals such as piglets, calves, lambs and kids during their earliest stages of life, during which they require a milk supply, whether it be from the mother or from a feeding programme based on milk for development, which is obtained from powered milk originating from the same mammal or from other sources.

Whey is the liquid that remains after milk has curdled during the production of cheese, when the casein and fat separate. It contains 80-90% of the milk's volume and more than 50% of the milk's nutrients. It can be sweet if it is obtained from the production of aged cheese, or acidic if it is obtained from the production of fresh cheese. Acid whey can also be obtained from the production of casein.

Powdered whey is the result of drying whey (atomisation - *spray dry).* In the drying process, different fractions of whey can be separated, thus obtaining different products: proteins through ultrafiltration that separate from soluble substances (permeate) that are richer in lactose, which makes up the rest of the whey.

Thus, the whey permeate is a free-flowing, homogeneous powder, manufactured from the portion of the ingredient that remains after the ultrafiltration of the fresh liquid whey that results from cheese production. Whey permeate is creamy white, with a mild odour, a slightly higher lactose content and a lower protein content than milk whey.

### Background of the invention

The incorporation of dairy products to cover the essential dietary needs of animals, such as piglets, calves, lambs and kids, during their earliest stages of life is carried out in feed mills as powdered whey, this being the only product referenced in the current state of the art.

Both whey and the whey permeate have been used in piglet feed, being a key product for the early weaning of piglets, among other benefits, because it is an easily digestible energy source (proteins) and it decreases pH in the digestive tract, thus increasing the concentration of lactobacilli, which improves the digestibility of the protein.

The problems that arise from these products when they are used in the diet of piglets are related to caking and the lack of fluidity, as well as the variability in density and composition. Caking is closely related to the polymorphic state of lactose, such that a high level of lactic acid favours caking. Increased moisture and the small size of particles lead to the formation of clumps.

The extrusion process is well-known in the industry for manufacturing food products that are intended for humans or for feeding animals. Extrusion is a process used to shape a flexible substance or malleable material, forcing it through a restriction or an opening.

Some of the industrial applications of extrusion are found in grain processing, both for human diet, such as breakfast cereals, snacks and baby foods, as well as for animal feed and food for fish and pets.

Currently an extruder apparatus is considered to be a high temperature bioreactor with a short residence time that transforms a wide variety of raw materials into modified intermediate products or final products. The extruder consists of a horizontal cylinder that contains a worm which turns while it is fed with one or several ingredients that are subjected to a specific pressure so that they can move to the outside.

Regardless of how well-known the use of lactic whey and whey permeate in its application in animal feed is and that grain extrusion processes are also known, currently there are no known products that are obtained by mixing grains with liquid whey permeate and/or mother liquor, which come from the leftovers of the dairy industry, and therefore there is no knowledge of a method used when manufacturing products of this nature.

US2008193587 describes a method for producing a composition formulated for young cattle, which comprises mixing distillers solubles with at least one of a milk replacer powder, whole milk, and waste milk.

### Description of the invention

The invention is as disclosed in the appended claims.

In the case that concerns us, the process for obtaining dairy-enriched feed is obtained by means of an extrusion process, which must be developed under certain conditions of pressure, temperature, moisture and time.

The products obtained through this method are intended to be used as ingredients in feed for piglets and lactating ruminants. In addition, their use provides a series of practical advantages with respect to other existing feed types with this purpose, which make them especially suitable for feeding piglets and other mammals.

Extrusion can be carried out either through a dry process or a wet process. The second option is used to produce dairy-enriched grains. The process for obtaining these products starts with the homogeneous milling of the grain that is to be extruded. The particle size of the milled grain should not exceed 1.5 mm, which will enable the grain flour to better absorb the whey permeate.

The grain flour travels through a first endless worm, a conditioner, onto which saturated steam is injected, such that the mixture of flour and steam form a prepared pre-mixture at a temperature that ranges between 60° C and 85° C. This worm delivers the prepared pre-mixture to a second endless worm onto which a first percentage of the liquid whey permeate is added, which will range between 20% and 40%. The temperature of this permeate should be greater than 57° C and less than 62° C. This worm is called the homogeniser or mixer, since it is where the prepared flour is mixed with the liquid whey permeate at the temperature indicated.

The mixture of grain flour, steam and liquid lactose enters the extruder itself and travels through it at high speed (between 3 and 7 seconds). The mixture reaches temperatures of 95° C to 105° C and internal pressures of 25-40 bars.

At this point and during a short period of time, the rest of the lactose needed to make the concentration of this sugar as high as possible in the final product is added. This lactose should also be injected at a temperature between 57° C and 62° C.

The resulting product passes through holes drilled in a metal matrix and are cut by a series of blades that shape the final product.

### Exemplary embodiments

In the studies carried out for the development of the invention, three types of grains were used: wheat, corn and rice. The use of other grains in the future has not been ruled out, whether using a single type of grain or mixing different types of grains. The term grain should be considered in its broadest sense for the purposes of the invention.

The lactic extrusion process that has been developed is summarised as the enrichment of a grain, wheat, corn or rice, to which a specific percentage of liquid whey permeate is added. This is the distinguishing characteristic of the products obtained through these processes (dairy-enriched wheat, corn or rice): The incorporation of lactose and lactic acid in liquid form through the use of a whey permeate with a dry extract concentration that ranges between 47 and 54%.

The technical characteristics of the liquid whey permeate and the composition thereof will fall within the following margins of tolerance:

| | |
|---|---|
| Total dry extract | 47.0 - 54.0 % |
| Crude protein | 1.2 - 4.0 % |
| Lactose | 33.0 - 44.0 % |
| Lactic acid | 0,3 - 3,0 % |
| Ash | 4.0 - 7.0 % |
| Chlorides | 0.8 - 1.6 % |
| Sodium | 0.5 - 0.7 % |
| Potassium | 0.8 - 1.4 % |
| Phosphorus | 0.2 - 0.7 % |

The levels of incorporation of the permeates and/or mother liquor to the mixture depend on the grain that is used. When the base is wheat, between 55% and 65% of the liquid permeate and/or mother liquor can be added. When the base is corn, the levels of incorporation of the whey permeate and/or mother liquor will be between 30% and 40%. When the base is rice, the levels of incorporation of the whey permeate and/or mother liquor will be the same as that of corn.

The composition of the final product, when obtained through the lactic extrusion of wheat at very high temperature, moisture and pressure levels in a short period of time, is the following:

| | |
|---|---|
| Humidity: | 10.5% +/- 1.0 % |
| Crude protein: | 9.4% +/- 0.5 % |
| Oils and Crude Fat: | 1.8% +/- 0.2 % |
| Hydrated lactose: | 15.0% +/- 1.0 % |
| Lactic acid: | 1.5% +/- 0.3 % |
| Starch: | 50.0% +/- 1.0 % |
| Crude fibre: | 2.4% +/- 0.5 % |
| Crude ash: | 4.0% +/- 0.5 % |

The final composition of the product that is obtained through the lactic extrusion of corn or rice at very high temperature, moisture and pressure levels in a short period of time, has the following analytical overview:

| | |
|---|---|
| Humidity: | 10.5% +/- 1.0 % |
| Crude protein: | 7.8% +/- 0.5 % |
| Oils and Crude Fat: | 3.4% +/- 0.3 % |
| Hydrated lactose: | 10.7% +/- 0.8 % |
| Lactic acid: | 1.0% +/- 0.2 % |
| Starch: | 56.0% +/- 1.0 % |
| Crude fibre: | 2.5% +/- 0.5 % |
| Crude ash: | 3.2% +/- 0.5 % |

In all the cases, the most notable microbiological characteristics are:
E.coli: Absence in 0.1 g.
Salmonella: Absence in 25 g.

It is a good idea to transport and store the product in a cool, dry place. Keep it away from sources of taste and smell contamination, and at a temperature less than 30° C. The preferential use of the product is 6 months after the date of manufacture.

Among the advantages of using dairy-enriched grains as a raw material in the feed for young animals (piglets, calves, lambs and kids), it is worth mentioning:
- The use of a liquid lactic co-product originating from the cheese manufacturing industry.
- It is important to highlight the environmental benefit that it entails due to the polluting power of the whey permeates and their difficult and costly removal.
- The enrichment of a grain with lactose, which makes its inclusion in the diet of young animals, such as piglets, calves, lambs and kids, more attractive.
- The use of these extruded lactic products in feed mills enables more useful space to be available in said facilities since powdered whey, an alternative to the use of dairy liquids, requires significant storage space.
- All of the advantages that are provided by the extrusion process, which includes:
   - Extrusion reduces microbial contamination and deactivates anti-nutritional factors (ANF): it cleans the processed product.
   - The extrusion process increases the degree of gelatinisation of the starches and increases the soluble PNAs and the insolubilisation of the proteins.
   - Extrusion enables high temperatures to be reached in short exposure times, which makes this process highly recommendable for animal feed.
   - In strictly nutritional terms, the extrusion process would be more successful if applied to individual raw materials than to finished feed.

## Claims

1. A method for obtaining a whey permeate feed, **characterised in that** it comprises the following phases:
a) the process starts with the homogeneous milling of the grain or grains used to obtain this feed, with a particle size that preferably does not exceed 1.5 mm;
b) the grain flour is introduced into a first endless worm, a conditioner, onto which saturated steam is injected in order to form a prepared pre-mixture at a temperature that ranges between 60 °C and 85 °C;
c) the prepared pre-mixture is introduced into a second endless worm homogeniser, onto which a first percentage of the liquid whey permeate, which ranges between 20% and 40%, at a temperature between 57 °C and 62 °C, is added, this being the phase in which the flour is mixed with the liquid whey permeate at the temperature indicated;
d) the mixture of grain flour, steam and a part of the whey permeate is introduced into the extruder, through which it travels at high speed, and where the remaining amount of the whey permeate used in the process is added in this part of the process, also at a temperature between 57°C and 62°C, at the same time that heat is applied to the mixture until it reaches a temperature between 95-150°C and internal pressures of 25-40 bars.
e) the resulting product, which passes through holes drilled in a metal matrix of the extruder, are cut by a series of blades that give the final product its sliced or biscuit shape.

2. A whey permeate feed obtained from the method in claim 1, **characterised in that** it comprises:
a) a grain or mixture of grains with a percentage comprised between 75% and 85% of the weight of the final product;
b) whey permeates in a percentage that ranges between 15% and 22% of the weight of the final product.

3. The whey permeate feed, according to claim 2, **characterised in that** the grain used is wheat, which becomes 78% of the mixture, while the permeate makes up 22%.

4. The whey permeate feed, according to claim 2, **characterised in that** the grain used is corn, which becomes 85% of the mixture, while the permeate makes up 15%.

5. The whey permeate feed, according to claim 2, **characterised in that** the grain used is rice, which becomes 85% of the mixture, while the permeate makes up 15%.

6. The whey permeate feed according to claims 2 to 5, **characterised in that** the final product has the shape of a slice or dry biscuit, with a degree of moisture close to 10%.

7. The whey permeate feed according to claims 2 to 5, **characterised in that** the final product has the following composition
| | |
|---|---|
| a) Crude protein: | 7.5 % - 10.0 % |
| b) Oils and fats: | 1.5 % - 3.5 % |
| c) Hydrated lactose: | 10.0 % - 15.0 % |
| d) Lactic acid: | 1.0 % - 1.5 % |
| e) Starch | 45.0 % - 60 % |
| f) Crude fibre: | 2.3 % - 2.6 % |
| g) Crude ash: | 3.0 % - 4.2 % |
| h) Moisture: | 9.5 % - 11 %. |

## Patentansprüche

1. Verfahren zur Gewinnung eines Molkepermeatfutters, **dadurch gekennzeichnet, dass** es die folgenden Phasen umfasst:
a) der Prozess beginnt mit dem homogenen Mahlen des Getreides, das zur Gewinnung dieses Futters verwendet wird, mit einer Teilchengröße, die vorzugsweise 1,5 mm nicht überschreitet;
b) das Getreidemehl wird in eine erste endlose Schnecke, einen Konditionierer, eingeführt, auf den Sattdampf eingespritzt wird, um eine fertige Vormischung bei einer Temperatur zwischen 60 °C und 85 °C zu bilden;
c) die fertige Vormischung wird in einen zweiten endlosen Schneckenhomogenisator eingeführt, auf den ein erster Prozentsatz des flüssigen Molkepermeats, der zwischen 20 % und 40 % liegt, bei einer Temperatur zwischen 57 °C und 62 °C zugegeben wird, wobei dies die Phase ist, in der das Mehl mit dem flüssigen Molkepermeat bei der angegebenen Temperatur gemischt wird;
d) die Mischung aus Getreidemehl, Dampf und einem Teil des Molkepermeats wird in den Extruder eingeführt, durch den sie mit hoher Geschwindigkeit läuft, und wo die restliche Menge des im Prozess eingesetzten Molkepermeats in diesem Teil des Prozesses zugegeben wird, ebenfalls bei einer Temperatur zwischen 57 °C und 62 °C, wobei gleichzeitig der Mischung Wärme zugeführt wird, bis sie eine Temperatur zwischen 95 - 150 °C und Innendrücke von 25 - 40 bar erreicht;
e) das resultierende Produkt, das durch Löcher läuft, die in eine Metallmatrix des Extruders gebohrt sind, wird durch eine Reihe von Klingen geschnitten, die dem Endprodukt seine geschnittene Form oder Keksform verleihen.

2. Molkepermeatfutter, erhalten durch das Verfahren nach Anspruch 1, **dadurch gekennzeichnet, dass** es Folgendes umfasst:
a) Getreide oder eine Getreidemischung mit einem Anteil zwischen 75 % und 85 % des Gewichts des Endprodukts;
b) Molkepermeat in einem Prozentsatz zwischen 15 % und 22% des Gewichts des Endprodukts.

3. Molkepermeatfutter nach Anspruch 2, **dadurch gekennzeichnet, dass** das verwendete Getreide Weizen ist, der 78 % der Mischung ausmacht, während das Permeat 22 % ausmacht.

4. Molkepermeatfutter nach Anspruch 2, **dadurch gekennzeichnet, dass** das verwendete Getreide Mais ist, der 85 % der Mischung ausmacht, während das Permeat 15 % ausmacht.

5. Molkepermeatfutter nach Anspruch 2, **dadurch gekennzeichnet, dass** das verwendete Getreide Reis ist, der 85 % der Mischung ausmacht, während das Permeat 15 % ausmacht.

6. Molkepermeatfutter nach den Ansprüchen 2 bis 5, **dadurch gekennzeichnet, dass** das Endprodukt die Form einer Scheibe oder eines trockenen Kekses mit einem Feuchtigkeitsgrad von etwa 10 % hat.

7. Molkepermeatfutter nach den Ansprüchen 2 bis 5, **dadurch gekennzeichnet, dass** das Endprodukt die folgende Zusammensetzung hat:
| | |
|---|---|
| a) Rohprotein: | 7,5 % - 10,0 % |
| b) Öle und Fette: | 1,5 % - 3,5 % |
| c) Hydratisierte Laktose: | 10,0 % - 15,0 % |
| d) Milchsäure: | 1,0 % - 1,5 % |
| e) Stärke | 45,0 % - 60 % |
| f) Rohfaser: | 2,3 % - 2,6 % |
| g) Rohasche: | 3,0 % - 4,2 % |
| h) Feuchtigkeit: | 9,5 % - 11 %. |

## Revendications

1. Procédé d'obtention d'un aliment à base de perméat de lactosérum, **caractérisé par le fait qu'**il comprend les phases suivantes :
a) le procédé débute par le moulage homogène de la céréale ou des céréales utilisées dans l'obtention de cet aliment, avec une granulométrie qui préférentiellement n'excède pas 1,5 mm ;
b) la farine de la céréale est introduite dans une première vis sans fin, de conditionnement, dans laquelle de la vapeur d'eau saturée est incorporée, pour former un prémélange conditionné à une température qui oscille entre 60 °C et 85 °C ;
c) le prémélange conditionné est introduit dans une seconde vis sans fin d'homogénéisation, où est incorporé un premier pourcentage de perméat de lactosérum liquide, qui oscille entre 20 % et 40 %, à une température comprise entre 57 °C et 62 °C, cette phase étant celle dans laquelle est mélangée la farine à la température indiquée avec le perméat de lactosérum liquide ;
d) le mélange de farine de céréale, de vapeur et d'une partie du perméat de lactosérum est introduit dans une extrudeuse à travers laquelle il passe à grande vitesse, étant incorporée dans cette partie du procédé la quantité restante de perméat de lactosérum employé dans le procédé, également à une température comprise entre 57 °C et 62 °C, en même temps que de la chaleur est apportée au mélange jusqu'à atteindre une température comprise entre 95 °C et 105 °C et des pressions internes de 25 à 40 bars.
e) le produit résultant, qui traverse les trous percés de la matrice métallique de l'extrudeuse, est coupé par des lames qui procurent au produit final une forme de tranches ou de biscuits.

2. Aliment à base de perméat lactique, obtenu au moyen du procédé de la revendication 1, qui comprend :
a) une céréale ou un mélange de céréales dans un pourcentage compris entre 75 % et 85 % du poids du produit final ;
b) des perméats de lactosérum dans un pourcentage qui oscille entre 15 % et 22 % du poids du produit final.

3. Aliment à base de perméat lactique, selon la revendication 2, **caractérisé par le fait que** la céréale employée est le blé, qui vient faire partie du mélange à 78 %, tandis que le perméat constitue entre 22 %.

4. Aliment à base de perméat lactique, selon la revendication 2, **caractérisé par le fait que** la céréale employée est le maïs, qui vient faire partie du mélange à 85 %, tandis que le perméat constitue 15 %.

5. Aliment à base de perméat lactique, selon la revendication 2, **caractérisé par le fait que** la céréale employée est le riz, qui vient faire partie du mélange à 85 %, tandis que le perméat constitue 15 %.

6. Aliment à base de perméat lactique, selon les revendications 2 à 5, **caractérisé par le fait que** le produit final présente la forme d'une tranche ou d'un biscuit sec, avec un degré d'humidité proche de 10 %.

7. Aliment à base de perméat lactique, selon les revendications 2 à 5, **caractérisé par le fait que** le produit final présente la composition suivante
| | |
|---|---|
| a) Protéine brute : | 7,5 % à 10,0 % |
| b) Huiles et graisses | 1,5 % à 3,5 % |
| c) Lactose hydraté : | 10,0 % à 15,0 % |
| d) Acide lactique : | 1,0 % à 1,5 % |
| e) Amidon : | 45,0 % à 60 % |
| f) Fibre brute : | 2,3 % à 2,6 % |
| g) Cendres brutes : | 3,0 % à 4,2 % |
| h) Humidité | 9,5 % à 11 % |
